# EUROPÄISCHE PATENTANMELDUNG

(11) **EP 1 745 950 A2**
(43) Veröffentlichungstag der Anmeldung: **24.01.2007**
(21) Anmeldenummer: 06014451.6
(22) Anmeldetag: 12.07.2006
(51) Int. Cl.: B60D 1/54

(54) **Dichtung für eine Anhängerkupplung**

(30) Priorität: 22.07.2005 DE 202005011754 U
(71) Anmelder: Jaeger Cartronix GmbH, 61145 Friedberg (DE)
(72) Erfinder: Hachadorian, Gary, 63934 Röllbach (DE)
(74) Vertreter: KEIL & SCHAAFHAUSEN Patentanwälte

(57) **Zusammenfassung**

Es wird eine Dichtung für eine Anhängerkupplung (1) mit einem Antriebsblock (3) und einer aus dem Antriebsblock (3) herausragenden Kugelstange (2) beschrieben, wobei die Dichtung (4) zur Abdichtung des Antriebsblocks (3) gegen die Kugelstange (2) an der der Kugelstange (2) zugewandten Seite des Antriebsblocks (3) und am Umfang der Kugelstange (2) anlegbar ist. Um die Dichtung (4) gegen Beschädigungen widerstandsfähiger zu machen, ist die Dichtung (4) in dem am Umfang der Kugelstange (2) anlegbaren Bereich (10) doppelwandig ausgebildet. Zusätzlich oder alternativ können auf der Innenfläche der Außenwand (9) der Dichtung sind ferner Abstandselemente (12) angeordnet sein.

## Beschreibung

Die Erfindung betrifft eine Dichtung für eine Anhängerkupplung für Kraftfahrzeuge mit einem Antriebsblock und einer aus dem Antriebsblock herausragenden Kugelstange. Insbesondere kann die Kugelstange durch den Antriebsblock zwischen einer Ruhestellung und einer Betriebsstellung verstellt werden. Die Dichtung dient dazu, den Antriebsblock im Einsatz am Kraftfahrzeug vor Feuchtigkeit zu schützen, die den Antriebsmechanismus beeinträchtigen könnte. Dazu ist die Dichtung an der der Kugelstange zugewandten Seite des Antriebsblocks und am Umfang der Kugelstange anlegbar.

Derartige Dichtungen sind als einwandige Schutzkappen bekannt, die über den Kugelhals geschoben und bspw. mit einem Befestigungsblech abdichtend an den Antriebsblock festgelegt werden. Bei den bekannten Dichtungen besteht jedoch das Problem, dass diese durch Steinschlag leicht beschädigt werden und dann häufig ausgetauscht werden müssen.

Aufgabe der Erfindung ist es daher, eine Dichtung für eine Anhängerkupplung der eingangs genannten Art vorzuschlagen, welche widerstandsfähiger gegen Beschädigungen ist und eine hohe Dichtwirkung erreicht.

Diese Aufgabe wird erfindungsgemäß mit den Merkmalen des Anspruchs 1 insbesondere dadurch gelöst, dass die Dichtung in dem am Umfang der Kugelstange anliegenden Bereich doppelwandig ausgebildet ist. Alternativ oder zusätzlich können auf der Innenfläche der Außenwand der Dichtung auch Abstandselemente angeordnet sein, welche sich an einem von der Dichtung umgebenen Bauteil, insbesondere der Kugelstange, direkt oder an einer an Bauteil anliegenden Wand der doppelwandigen Dichtung abstützen können. Die Erfindung macht sich dabei zu Nutze, dass eine Dichtung in der Regel dann aufgrund von Steinschlag durchdrungen werden kann, wenn der an sich elastische Werkstoff der Dichtung keinen Platz zur Verformung hat. Wenn die Dichtung während des Steinschlags fest fixiert ist, wird das Material also nicht durch die Kerbwirkungen versagen, sondern wegen der Zug- oder Scherspannungen. In den Bereichen, in denen die Dichtung an der Anhängerkupplung anliegen kann, wird die Dichtung daher erfindungsgemäß entweder doppelwandig ausgebildet und/oder mit Abstandselementen auf der Innenseite der Außenwand versehen, welche einen Mindestabstand der äußeren Wand und den darunter liegenden Bauteilen erreichen. Die Abstandselemente erstrecken sich dabei nicht bis in die Dichtfläche selbst, sondern vorzugsweise bis an die Dichtfläche heran. Die erfindungsgemäße Anordnung mit einem doppelwandigen Aufbau der Dichtung und/oder der Anordnung der Abstandselement eignet sich insbesondere für den für einen Steinschlag besonders exponierten Bereich, in dem die Dichtung am Umfang der Kugelstange anliegt. Durch die doppelwandige Ausbildung und/oder das Vorsehen von Abstandselementen in diesem Bereich wird die Fähigkeit der Dichtung zur Verformung erhöht und die Haltbarkeit der Dichtung verbessert. Insbesondere liegt die zweite Wand bzw. die Außenwand in diesem Fall nicht fest an der Kugelstange an und kann einem Steinschlag durch Verformung ausweichen.

Die erste Wand (Innenwand) des doppelwandigen Bereichs kann eine durch die zweite Wand (Außenwand) geschützte Dichtlippe bilden, weiche abdichtend am Kugelhals anlegbar ist. Diese erste Wand kann durch einen Steinschlag dann nicht getroffen werden.

Zur abdichtenden Fixierung der Dichtlippe an dem Kugelhals kann ein Rastband mit einem vorzugsweise fest vorgegebenen Innendurchmesser vorgesehen werden, so dass das Rastband in dem Dichtraum mit vorgegebenem Anpressdruck um die erste Wand (Innenwand) gespannt wird und so eine definierte Dichtwirkung der Dichtlippe gegen den Kugelhals hervorruft. Zudem wirkt das insbesondere aus einem textilen Webmaterial aufgebaute Rastband als zusätzlicher Schutz der innen liegenden, ersten Wand der Dichtung. Die Verwendung eines Rastbandes ist gegenüber herkömmlichen Schellen oder Kabelbindern also vorteilhaft, weil hierdurch eine erhöhte Schutzwirkung erreicht wird. Metallische Spannschellen oder schmale scharfkantige Kabelbinder könnten die Innenwand unter Umständen beschädigen. Außerdem ist bei diesen Hälteelementen der Anpressdruck nicht definiert vorgegeben, so dass es leichter zu einer fehlerhaften Montage kommen kann.

Gemäß einer bevorzugten Ausführungsform kann das Rastband einen Rastverschluss mit einem Rasthaken und einer Rastaufnahme aufweist, in welcher der Rasthaken einfach einrastbar ist. Diese besondere einfache Verschlussart kann vorzugsweise so realisiert werden, dass der Rasthaken flexible Schenkel aufweist, die einander gegenüberliegend angeordnet sind und unter Krafteinwirkung bspw. beim Einschieben des Rasthakens in die Rastaufnahme durch eine Führung der Rastaufnahme zusammengedrückt werden. Dieser Verstellweg ist zur Sicherung durch eine an der Rastaufnahme vorgesehene Verriegelung vorzugsweise arretierbar. Dazu kann die Verriegelung einfacher Weise zwischen die beiden Schenkel des Rasthakens eingedrückt werden, so dass sich diese nicht mehr zusammendrücken lassen.

Um zu erreichen, dass die erste Wand mit der Dichtlippe vollständig geschützt ist, kann sich die zweite Wand von der Kugelstange bis zu dem Antriebsblock erstrecken und die eine Dichtfläche an der Kugelstange mit der zweiten Dichtfläche an dem Antriebsblock verbinden, um die gewünschte Dichtwirkung zu erreichen.

Gemäß einer besonders bevorzugten doppelwandigen Ausführungsform der Erfindung sind die erste Wand (Innenwand) und die zweite Wand (Außenwand) insbesondere in dem doppelwandigen Bereich beabstandet voneinander angeordnet. Weil die zweite Wand dann nicht an der ersten Wand anliegt, kann sich die zweite Wand zum Schutz der ersten Wand bei einem Steinschlag besonders gut verformen und die Energie des Steinschlags gut abfangen.

Um unter allen Betriebsbedingungen und in allen Betriebsstellungen der Anhängerkupplung den Abstand zwischen den beiden Wänden der doppelwandigen Ausführungsform zu gewährleisten, können an der ersten Wand (Innenwand) und/oder der zweiten Wand (Außenwand) der Dichtung Abstandselemente vorgesehen sein, welche der jeweils anderen Wand zugewandt sind. Durch solche Abstandselemente wird also ein minimaler Abstand zwischen den beiden Wänden sichergestellt, auch wenn die äußere Wand bspw. aufgrund eines Steinschlags an die innere Wand gedrückt wird. Einfacher Weise können die Abstandselemente als Erhebungen in mindestens einer der beiden Wände ausgebildet sein. Es ist auch möglich, dass die Erhebungen in beiden Wänden an einander entsprechenden Stellen oder versetzt zueinander vorgesehen sind. Die Abstandselemente für den anderen erfindungsgemäßen Fall, in dem die Dichtung einwandig ausgebildet ist und Abstandselemente auf der Innenseite der Außenwand aufweist, können genauso ausgebildet werden.

Es hat sich herausgestellt, dass eine gute Haltbarkeit der Dichtung erreicht werden kann, wenn die Abstandselemente als Stege ausgebildet sind, welche vorzugsweise in Axialrichtung mit der Kugelstange verlaufen.

Ferner kann der Abstand zwischen der ersten Wand und der zweiten Wand entlang des Umfangs der Kugelstange bzw. der dieser entsprechenden Dichtfläche verschieden sein. Dadurch kann die Bewegungsfreiheit der Kugelstange bspw. bei einem Verschwenken oder Verfahren entsprechend den jeweiligen Gegebenheiten eingestellt werden, wobei der Abstand zwischen der ersten und der zweiten Wand umso größer sein sollte, je mehr Bewegungsraum für die Kugelstange in diese Richtung benötigt wird.

Eine besonders hohe Verformbarkeit der zweiten Wand lässt sich dadurch erreichen, dass die zweite Wand länger ist als der direkte Abstand zwischen den Anlagepunkten der Dichtung an dem Antriebsblock und der Kugelstange und die zweite Wand in Mäandern verläuft.

Vorzugsweise besteht die Dichtung aus einem elastischen oder gummielastischen Material, das eine besonders große Flexibilität aufweist.

Zur Verstärkung der Dichtung kann die erste Wand und/oder die zweite Wand der Dichtung ein oder mehrere Schutzprofile aufweisen, die insbesondere das guinmielastische Material vor einem Einreißen schützen. Daher ist es sinnvoll, derartige Schutzprofile an besonders beanspruchten oder gefährdeten Stellen anzubringen. Dies können durch die Bewegung der Kugelstange bspw. auf Zug oder Knickung belastete Stellen der Dichtung oder freiliegende Bereiche sein, die für einen Steinschlag besonders anfällig sind.

Bevorzugter Weise kann ein Schutzprofil auf der Außenseite der Dichtung aufgebracht sein, um die Kraft eines Steines bei Steinschlag unmittelbar abzufangen, bevor der Stein auf das elastische Material der Dichtung direkt einwirkt. Das Schutzprofil kann erhaben auf der Oberfläche der Dichtung aufliegen oder in die Dichtung eingelassen sein. Eine besonders gute Schutzwirkung wird erreicht, wenn beide Arten der Befestigung der Schutzprofile vorgesehen werden. Ein Schutzprofil besteht vorzugsweise aus einem flexiblen, aber stabilen Material.

Weitere Merkmale, Vorteile und Anwendungsmöglichkeiten der Erfindung ergeben sich auch aus der nachfolgenden Beschreibung von Ausführungsbeispielen und der Zeichnung. Dabei bilden alle beschrieben und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: eine Seitenansicht einer Anhängerkupplung mit einem Schnitt durch die erfindungsgemäße Dichtung;
- Fig. 2: eine dreidimensionale Ansicht der Dichtung gemäß Fig. 1 von oben;
- Fig. 3: eine dreidimensionale Ansicht der Dichtung gemäß Fig. 1 von unten;
- Fig. 4: eine dreidimensionale Ansicht der Dichtung in einer Variante der Ausführungsform gemäß Fig. 2;
- Fig. 5: ein Rastband gemäß der vorliegenden Erfindung in einer dreidimensionalen Ansicht;
- Fig. 6: einen Rasthaken und eine Rastaufnahme des Rastbandes gemäß Fig. 5;
- Fig. 7: einen in die Rastaufnahme aufgenommenen Rasthaken im unverriegelten Zustand bei einem Rastband gemäß Fig. 5 und
- Fig. 8: einen in die Rastaufnahme aufgenommenen Rasthaken im verriegelten Zustand bei einem Rastband gemäß Fig. 5.

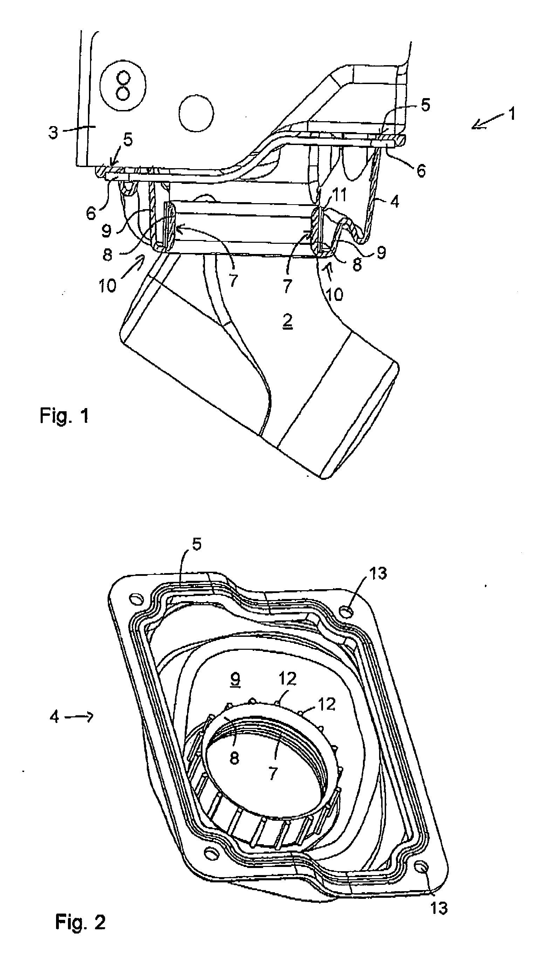

In Fig. 1 ist eine Anhängerkupplung 1 mit einer Kugelstange 2 und einem Antriebsblock 3 dargestellt. Der Antriebsblock 3 dient dazu, die Kugelstange 2 zwischen einer Ruhestellung, in welcher sich die Kugelstange 2 in einer nicht sichtbaren Position an einem Kraftfahrzeug, bspw. einem Personenkraftwagen, befindet, und einer Betriebsstellung hin und her zu bewegen, in welcher ein Anhänger an die Kugelstange angehängt werden kann. Aufgrund der Bewegung der Kugelstange 2 müssen in dem Gehäuse des Antriebsblocks 3 Öffnungen vorgesehen sein, die abgedichtet werden müssen, um den Antriebsblock und damit den Antrieb vor dem Eindringen von Feuchtigkeit, bspw. von Spritzwasser, zu schützen.

Dazu ist zwischen dem Antriebsblock 3 und der Kugelstange 2 eine Dichtung 4 vorgesehen, die in Fig. 1 im Schnitt dargestellt ist. Diese weist an ihrem einen Rand eine erste Dichtfläche 5 auf, mit welcher die Dichtung 4 an dem Antriebsblock anliegt. In dieser Position wird sie durch ein Befestigungsblech 6 unter Druck an dem Antriebsblock fixiert, um die gewünschte Dichtwirkung zu erreichen. Das Befestigungsblech 6 ist an dem Antriebsblock 3 angeschraubt.

An ihrem entgegensetzten Ende weist die Dichtung 4 eine zweite Dichtfläche 7 auf, welche als Dichtlippe ausgebildet ist, die fest am Umfang der Kugelstange 2 anliegt und so gegen die Kugelstange 2 abdichtet. Die Dichtlippe bildet eine erste Wand 8 eines doppelwandigen Bereichs 10 der Dichtung 4. Der doppelwandige Bereich 10 der Dichtung 4 liegt am Umfang der Kugelstange 4 an, wo der durch eine Schelle 11 oder ein Rastband 17 fixiert ist.

Die zweite Wand 9 des doppelwandigen Bereichs 10 der Dichtung 4 bildet eine Außenwand der Dichtung 4 und erstreckt sich von der Kugelstange 2 bis zu dem Antriebsblock 3. Die erste Wand 8 und die zweite Wand 9 sind voneinander beabstandet angeordnet. Dadurch hat die zweite Wand 9 der Dichtung 4, welche wie üblich aus einem elastischen, bspw. gummiartigen Material aufgebaut ist, die Möglichkeit, sich bei einem Steinschlag zu verformen. Durch diese Möglichkeit treten geringere Zug- oder Scherspannungen in der Dichtung 4 auf als in einem Fall, in dem eine Dichtung aus gummiartigem Material fest fixiert ist. Dadurch wird die Haltbarkeit der Dichtung wesentlich verbessert.

Wie der dreidimensionalen Ansicht der Dichtung 4 gemäß Fig. 2 zu entnehmen, sind an der der zweiten Wand 9 zugewandten Seite der ersten Wand 8 Abstandselemente 12 in Form von in Axialrichtung der Kugelstange verlaufenden Stegen vorgesehen, die von der Oberfläche der ersten Wand 8 vorstehen. In dem Zwischenraum zwischen zwei Abstandselementen 12 können die beiden Wände 8, 9 also nicht direkt aufeinander aufliegen, so dass in jedem Fall ausreichend Platz zur Verformung der zweiten Wand 9 bei einem Steinschlag ver bleibt.

Die Dichtflächen 5 und 7 der Dichtung 4 sind mit einer Profilierung versehen, um die Dichtwirkung zu verbessern, In der Nähe der Dichtfläche 5 sind in der Dichtung 4 Durchgangslöcher 13 ausgebildet, durch die die Dichtung 4 mit dem Befestigungsblech 6 an dem Antriebsblock 3 festgeschraubt werden kann.

Wie insbesondere Fig. 1 zu entnehmen, ist die zweite Wand 9 länger als der direkte Abstand von der Dichtfläche 7 im Bereich der Kugelstange 2 zu der Dichtfläche 5 im Bereich des Antriebsblocks 3. Dadurch fällt die zweite Wand 9 in Falten und kann sich besser verformen. Ferner ist der Abstand von der ersten zu der zweiten Wand 8, 9 entlang des Umfangs der Kugelstange 2 unterschiedlich. Auf der in Fig. 1 rechts dargestellten Seite ist dieser Abstand größer als auf der linken Seite. Dies eröffnet auf der rechten Seite eine größere Bewegungsfreiheit für die Kugelstange 2.

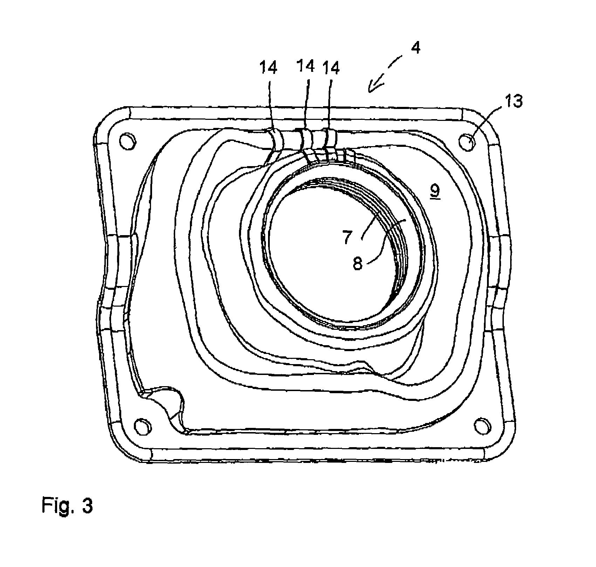

Fig. 3 zeigt eine Außenansicht der Dichtung 4. Auf der Außenwand 9 sind drei Schutzprofile 14 aus einem flexiblen, aber stabilen Material, bspw einem verformbaren Blech, aufgebracht, die von der Oberfläche der zweiten Wand 9 vorstehen und die Außenwand 9 sowie die Innenwand 8 zusätzlich vor mechanischen Beschädigung schützen. Die Schutzprofile 14 sind im Wesentlichen parallel zueinander angeordnet und erstrecken sich von der einen Dichtfläche 5 bis zu der anderen Dichtfläche 7 über die gesamte Länge der Dichtung 4. Die Schutzprofile können natürlich auch einen anderen Aufbau aufweisen und müssen nicht linear ausgebildet und parallel angeordnet sein, wie in Fig. 3 beispielhaft dargestellt.

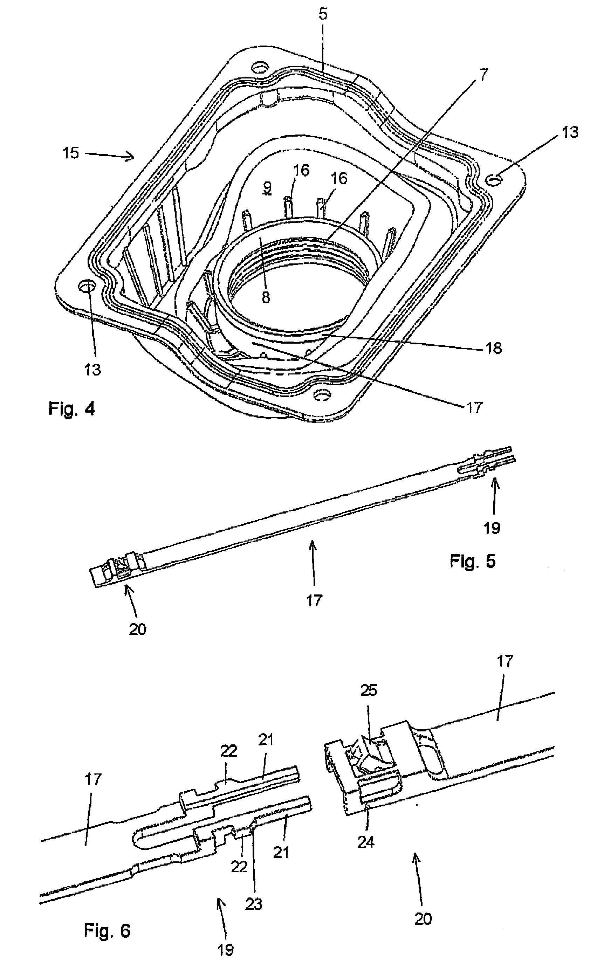

In Fig. 4 ist eine zweite Ausführungsform einer Dichtung 15 dargestellt, welche im grundsätzlichen Aufbau der zuvor beschriebenen Dichtung 4 entspricht. Daher wird auf eine ausführliche Beschreibung des Aufbaus der Dichtung 15 verzichtet und auf die vorstehende Beschreibung verwiesen. Für gleiche Merkmale werden dieselben Bezugszeichen verwendet. Nachfolgend werden nur Unterschiede der Dichtung 15 zu der Dichtung 4 beschrieben.

Die Dichtung 15 weist als Stege ausgebildete Abstandselemente 16 auf der Innenfläche der zweiten, äußeren Wand 9 auf, die sich bis zur ersten, inneren Wand 8 erstrecken. Auf der Innenfläche der ersten Wand können optional auch Abstandselemente 12 entsprechend der Dichtung 4 aufgebracht sein. Diese sind in Fig. 4 jedoch durch ein auf der Innenfläche der ersten, inneren Wand 8 umlaufendes Rastband 17 verdeckt, welches die innere Wand 8 an dem in Fig. 4 nicht dargestellten Kugelhals 2 fixiert. Das Rastband 17 erstreckt sich im Wesentlichen Ober die gesamte Höhe der Innenfläche der inneren Wand 8 und wird durch einen am äußeren, in der Darstellung oben liegenden Rand der inneren Wand 8 ausgebildeten Vorsprung 18 gehalten und gegen ein Abrutschen gesichert.

Im geschlossenen Zustand weist das Rastband 17 einen definierten Innendurchmesser auf, so dass der auf die innere Wand 8 und die an dem Kugelhals 2 anliegenden Dichtfläche 7 ausgeübte Anpresskraft genau voreingestellt ist. Hierdurch lässt sich eine optimale Dichtwirkung erreichen. Dazu weist das Rastband, wie in Fig. 5 dargestellt, eine vorgegebene Länge auf. An den Enden des Rastbands 17 ist ein Rastverschluss 19, 20 vorgesehen, der aus einem Rasthaken 19 an dem einen Ende des Rastbandes 17 und einer Rastaufnahme 20 an dem anderen Ende des Rastbandes ausgebildet ist. Der Rasthaken 19 ist in der Rastaufnahme 20 ein- bzw. verrastbar. Das Zusammenwirken des Rasthakens 19 mit der Rastaufnahme 20 ist in den Fig. 6 bis 8 erläuternd dargestellt.

Fig. 6 zeigt den Rasthaken 19 und die Rastaufnahme 20 kurz vor dem Zusammenstecken im Detail. Der Rasthaken 19 weist zwei Schenkel 21 auf, die parallel zueinander beabstandet von dem einen Ende des Rastbandes 17 vorstehen. Die Schenkel 21 weisen eine gewisse Flexibilität auf, so dass sie zusammengedrückt werden können. An ihren äußeren, voneinander abgewandten Seiten sind ferner Rastvorsprünge 22 ausgebildet, die an ihrem der Spitze der Schenkel 21 zugewandten Ende eine schräge Fläche 23 aufweisen.

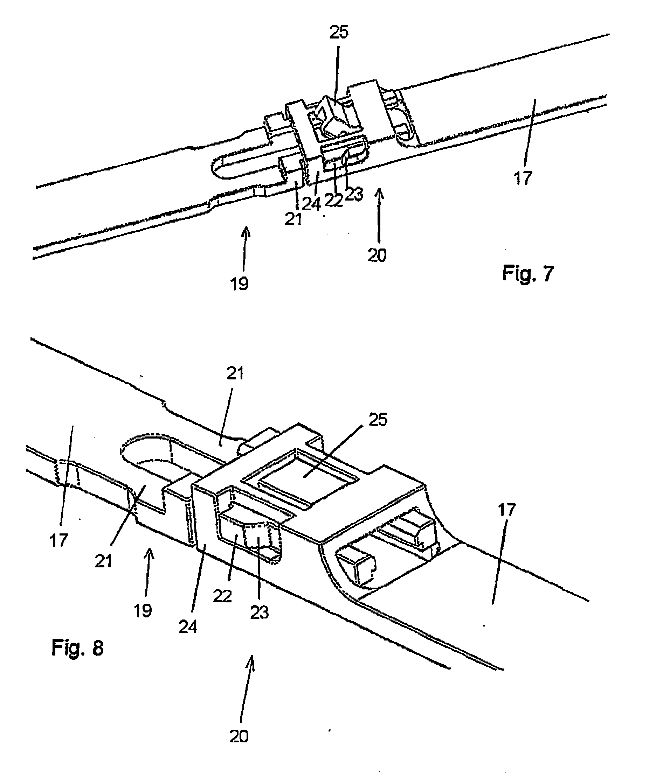

Diese schräge Fläche 23 wirkt mit einer Führung 24 der Rastaufnahme 20 derart zusammen, dass die Schenkel 21 beim Einschieben in die Rastaufnahme zunächst zusammendrückt werden, bis die Rastposition erreicht ist. In der in Fig. 7 dargestellten Rastposition verhakt sich der Rastvorsprung 22 jedes Schenkels 21 mit der Führung 24, indem die Schenkel nach dem Zusammendrücken während des Einschiebens wieder nach außen zurückspringen.

Um ein unbeabsichtigtes Öffnen des Rastverschlusses 19, 20 zu verhindern, ist an der Rastaufnahme 20 eine nach außen vorstehende Verriegelung 25 vorgesehen, welche im entriegelten Zustand den Innraum der Rastaufnahme 20 freigibt, so dass die zusammengerückten Schenkel 21 in die Rastaufnahme 20 eingeschoben werden können. In dem in Fig. 7 dargestellten verrasteten Zustand der Schenkel 21 kann die Verriegelung 25 dann zwischen die Schenkel 21 eingedrückt werden. Sie verhindert durch also ein mechanisches Blockieren des Verstellwegs der Schenkel 21 ein Lösen der Verrastung. Weil die Verrieglung 25 im verriegelten Zustand glatt mit der Rastaufnahme in etwa einer Ebene abschließt, wird auch ein unbeabsichtigtes Lösen der Verriegelung 25 verhindert. Daher stellt das Rastband 17 eine besonders zuverlässige und einfache Art der Befestigung der inneren Wand 8 an der Kugelstange 2 dar.

Mit der doppelwandigen Dichtung 4, 15, welche vorzugsweise auch noch Abstandselemente 12, 16 auf der Innenfläche ihrer Innenwand 8 und/oder Außenwand 9 aufweist, wurde eine insbesondere gegen Steinschlag oder dergleichen mechanische Beschädigungen gut geschützte Dichtung für eine Anhängerkupplung geschaffen, die im Vergleich zu bekannten Dichtungen eine erhöhte Haltbarkeit aufweist.

### Bezugszeichenliste:

- 1: Anhängerkupplung
- 2: Kugelstange
- 3: Antriebsblock
- 4: Dichtung
- 5: erste Dichtfläche
- 6: Befestigungsblech
- 7: zweite Dichtfläche, Dichtlippe
- 8: erste Wand
- 9: zweite Wand
- 10: doppelwandiger Bereich
- 11: Schelle
- 12: Abstandselemente
- 13: Durchgangslöcher
- 14: Schutzprofile
- 15: Dichtung
- 16: Abstandselemente
- 17: Rastband
- 18: Vorsprung
- 19: Rasthaken
- 20: Rastaufnahme
- 21: Schenkel
- 22: Rastvorsprung
- 23: schräge Fläche
- 24: Führung
- 25: Verriegelung

## Patentansprüche

1. Dichtung für eine Anhängerkupplung (1) mit einem Antriebsblock (3) und einer aus dem Antriebsblock (3) herausragenden Kugelstange (2), wobei die Dichtung (4) zur Abdichtung des Antriebsblocks (3) gegen die Kugelstange (2) an der der Kugelstange (2) zugewandten Seite des Antriebsblocks (3) und am Umfang der Kugelstange (2) anlegbar ist, **dadurch gekennzeichnet, dass** die Dichtung (4, 15) in dem am Umfang der Kugelstange (2) anlegbaren Bereich (10) doppelwandig ausgebildet ist und/oder auf der Innenfläche der Außenwand (9) der Dichtung (15) Abstandselemente (16) angeordnet sind.

2. Dichtung nach Anspruch 1, **dadurch gekennzeichnet, dass** die erste Wand (8) des doppelwandigen Bereichs (10) eine Dichtlippe (7) bildet, welche abdichtend am Kugelhals (2) anlegbar ist.

3. Dichtung nach Anspruch 2, **dadurch gekennzeichnet, dass** zur Fixierung der Dichtlippe (7) ein Rastband (17) vorgesehen ist, welches in dem Dichtraum um die erste Wand (8) spannbar ist.

4. Dichtung nach Anspruch 3, **dadurch gekennzeichnet, dass** das Rastband (17) einen Rastverschluss (19, 20) mit einem Rasthaken (19) und einer Rastaufnahme (20) aufweist, in welcher der Rasthaken (19) einrastbar ist.

5. Dichtung nach Anspruch 4, **dadurch gekennzeichnet, dass** der Rasthaken (19) flexible Schenkel (21) aufweist, deren Verstellweg durch eine an der Rastaufnahme (20) vorgesehene Verriegelung (25) arretierbar ist.

6. Dichtung nach einem der vorhergehenden Ansprüche, **dadurch gekennzeichnet, dass** sich die zweite Wand (9) von der Kugelstange (2) bis zu dem Antriebsblock (3) erstreckt.

7. Dichtung nach einem der vorhergehenden Ansprüche, **dadurch gekennzeichnet, dass** die erste Wand (8) und die zweite Wand (9) in dem doppelwandigen Bereich (10) beabstandet voneinander sind.

8. Dichtung nach einem der vorhergehenden Ansprüche, **dadurch gekennzeichnet, dass** an der ersten Wand (8) und/oder der zweiten Wand (9) Abstandselemente (12, 16) vorgesehen sind.

9. Dichtung nach einem der vorhergehenden Ansprüche, **dadurch gekennzeichnet, dass** die Abstandselemente (12, 16) als Stege ausgebildet sind.

10. Dichtung nach einem der vorhergehenden Ansprüche, **dadurch gekennzeichnet, dass** der Abstand zwischen der ersten Wand (8) und der zweiten Wand (9) entlang des Umfangs der Kugelstange (2) verschieden ist.

11. Dichtung nach einem der vorhegenden Ansprüche, **dadurch gekennzeichnet, dass** die zweite Wand (9) länger ist als der Abstand zwischen den Anlagepunkten der Dichtung (4, 15) an dem Antriebsblock (3) und der Kugelstange (2).

12. Dichtung nach einem der vorhergehenden Ansprüche, **dadurch gekennzeichnet, dass** die Dichtung (4, 15) aus einem gummielastischen Material besteht.

13. Dichtung nach einem der vorhergehenden Ansprüche, **dadurch gekennzeichnet, dass** die erste Wand (8) und/oder die zweite Wand (9) der Dichtung (4, 15) ein oder mehrere Schutzprofile (14) aufweist.

14. Dichtung nach Anspruch 13, **dadurch gekennzeichnet, dass** das Schutzprofil (14) auf der Außenseite der Dichtung (4, 15) aufgebracht ist.
